# EUROPEAN PATENT SPECIFICATION

(11) **EP 4 663 544 B1**
(45) Date of publication and mention of the grant of the patent: **27.05.2026**
(21) Application number: 24425026.2
(22) Date of filing: 10.06.2024
(51) Int. Cl.: B64C 27/28, B64C 29/00, B64C 3/38, B64C 9/18, B64C 9/04

(54) **CONVERTIPLANE**
WANDELFLUGZEUG
CONVERTIPLANE

(43) Date of publication of application: 17.12.2025
(73) Proprietor: Leonardo S.p.a., 00195 Roma (IT)
(72) Inventor: Antoni, Andrea, 21017 SAMARATE (VA) (IT); Corneo, Giuseppe Marco, 21017 SAMARATE (VA) (IT)
(74) Representative: Studio Torta S.p.A.

(56) References cited:
- EP-A1- 3 674 211
- US-A- 3 586 262
- US-A1- 2020 239 127
- US-A1- 2022 073 185
- US-B1- 6 607 161
- US-B2- 11 203 410

## Description

The present invention relates to a convertiplane and a related control method.

In the aviation industry, airplanes are typically used for high cruising speeds, particularly over 150 knots, and high altitudes, for example above 30,000 feet. For these high cruising speeds and altitudes, airplanes use fixed half-wings to generate the lift required to sustain the airplane itself. Sufficient lift can only be achieved by accelerating the airplane on runways of considerable length. These runways are also necessary to allow the airplanes to land.

Otherwise, helicopters generate the lift needed for sustenance by rotating the blades of the main rotor. As a result, helicopters can land/take off without the need for horizontal speed and using very small surfaces. Moreover, helicopters are capable of hover flying at relatively low altitudes and speeds, making them particularly easy to handle and suitable for demanding manoeuvres such as recovering people in the mountains or at sea.

Nevertheless, helicopters have inherent limitations regarding the maximum operating altitude, which is around 20,000 feet, and the maximum operating speed, which cannot exceed 150 knots.

Convertiplanes are known to meet the demand for aircraft capable of having the same ease of handling and use as the helicopter, while overcoming the inherent limitations indicated above.

In greater detail, known convertiplanes essentially comprise:
- a fuselage extending along a first longitudinal axis;
- a pair of half-wings projecting cantilevered from respective opposite sides of the fuselage and having respective free ends opposite the fuselage and aligned along a second transverse axis substantially orthogonal to the first longitudinal axis;
- a pair of nacelles carrying respective engines and operatively connected to the related half-wings; and
- a pair of rotors rotatable around respective third axes and operatively connected to respective engines.

In such an embodiment, as used for example in the BELL V-280 aircraft, the rotors can be tilted relative to the respective engines and nacelles and the respective half-wing around a respective fourth axis parallel to the second axis.

Convertiplanes are also able to selectively take:
- an "airplane" configuration, in which the rotors are arranged with respective third axes substantially parallel to the first axis of the convertiplane itself; or
- a "helicopter" configuration, in which the rotors are arranged with the respective third axes substantially vertical and transversal to the first axis of the convertiplane.

Being capable of tilting the rotors, convertiplanes are able to take off and land like a helicopter, i.e., in a direction substantially perpendicular to the first longitudinal axis of the convertiplane, without the need for a runway.

In addition, convertiplanes are also able to take off and land on rough terrain and without generating a noise level incompatible with urban settlement.

Furthermore, convertiplanes are capable of hover flying when arranged in the helicopter configuration.

In addition, convertiplanes can reach and maintain cruising speeds of approximately 250-300 knots and flight altitudes in the order of 30,000 feet when arranged in the "airplane" configuration.

This cruising speed is well above the value of approximately 150 knots which defines the maximum cruising speed of helicopters.

Similarly, the aforementioned altitude is much higher than that typical of helicopters and allows convertiplanes arranged in the "airplane" configuration to avoid the clouds and atmospheric disturbances characteristic of lower altitudes.

As is well known, the half-wings of aircraft each comprise a wingbox fixedly connected to the fuselage and movable appendages.

These movable appendages are hinged to the main body so as to define respective trailing edges of the corresponding half-wings.

Examples of such movable appendages are ailerons and flaps.

Ailerons are adapted to control the roll of the aircraft, i.e., the tilt of the aircraft about a longitudinal axis of the fuselage.

For this purpose, the ailerons are tilted in opposite directions to each other relative to the fuselage, so as to increase the lift of one half-wing and decrease the lift of the other half-wing.

The flaps are instead both tilted in the same direction to either increase or decrease the overall lift generated by the half-wings.

In order to reduce overall dimensions, it is also known to combine the aileron and the flap into a single movable appendage known in the industry as a "flaperon". In particular, flaperons act as flaps, i.e., they decrease or increase the lift generated by the half-wings during landing or take-off of the aircraft, or as ailerons, i.e., they decrease the lift of one half-wing and increase the lift of the other half-wing when the aircraft has to perform a roll manoeuvre.

Patent EP-B1-3674211 in the name of the same applicant discloses a convertiplane, wherein each half-wing comprises a wingbox and an appendage articulated on the wingbox and selectively movable between:
- a first neutral operating position taken when the convertiplane is in the "airplane" configuration and in which it defines an extension of the wingbox; and
- a second lowered operating position taken when the convertiplane is in the "helicopter" configuration and in which it defines with the wingbox a compartment through which the air flow generated by the rotors can pass.

The convertiplane described in EP-B1-3674211 further comprises drive mechanisms to automatically move the appendage between the first neutral position and the second operating position.

There is a need in the field to maintain the appendages in the respective first neutral positions when the convertiplane is in the "airplane" configuration. This need stems from the need to ensure adequate conditions for aeroelastic stability of the convertiplane, even in the event of failure of the drive mechanisms.

The object of the present invention is to provide a convertiplane, which allows the above-specified need to be met in a simple and inexpensive way.

According to the invention, this object is achieved by means of a convertiplane as claimed in claim 1.

For a better understanding of the present invention, a preferred, non-limiting embodiment thereof will be described below purely by way of example and with the aid of the accompanying drawings, wherein:
- Figure 1 is a top view of a convertiplane made according to the teachings of the present invention in a "helicopter" configuration and comprising a pair of half-wings;
- Figure 2 is a top view of the convertiplane shown in Figure 1 in an "airplane" configuration;
- Figure 3 is a front view of the convertiplane in Figures 1 and 2, showing the half-wing in the left-hand part of the figure in the "helicopter" configuration and the half-wing in the right-hand part of the figure in the "airplane" configuration;
- Figure 4A is a schematic section along the line IV-IV in Figure 1 of a half-wing shown in Figures 1 to 3 in a lowered operating configuration and illustrating a drive mechanism and a closing system of an appendage of said half-wing;
- Figure 4B is a view of a component of the drive mechanism in Figure 4A;
- Figures 5, 6 and 7 are views of the closing system of the appendage in Figure 4A in respective different operating positions;
- Figures 8, 9 and 10 are additional views of the closing system in the operating positions shown in Figures 5, 6 and 7, respectively;
- Figure 11 is a schematic view of the closing system with parts removed for clarity;
- Figure 12 is an enlarged perspective view of the closing system, with parts removed for clarity;
- Figure 13 is a perspective view of a portion of the closing system in a further enlarged scale;
- Figures 14 and 15 are perspective views of respective components of the closing system; and
- Figure 16 is a perspective view of a further component of the closing system.

With reference to the attached figures, the numeral 1 indicates an aircraft, in particular a convertiplane.

The convertiplane 1 essentially comprises:
- a fuselage 2 having a longitudinal extension axis A;
- a pair of half-wings 3 extending cantilevered from respective opposite sides of the fuselage 2 and transversely to axis A;
- a pair of nacelles 4 housing respective engines, not shown, and operatively connected to the corresponding half-wings 3; and
- a pair of rotors 5 operatively connected to respective engines.

In addition, the fuselage 2 comprises a nose 12 arranged at the front and a tail portion 13, opposite each other along the axis A.

The free ends 9 opposite to the fuselage 2 of respective half-wings 3 are aligned along an axis E orthogonal to the axis A. In addition, the rotors 5 are each arranged at the end 9 of a respective half-wing 3.

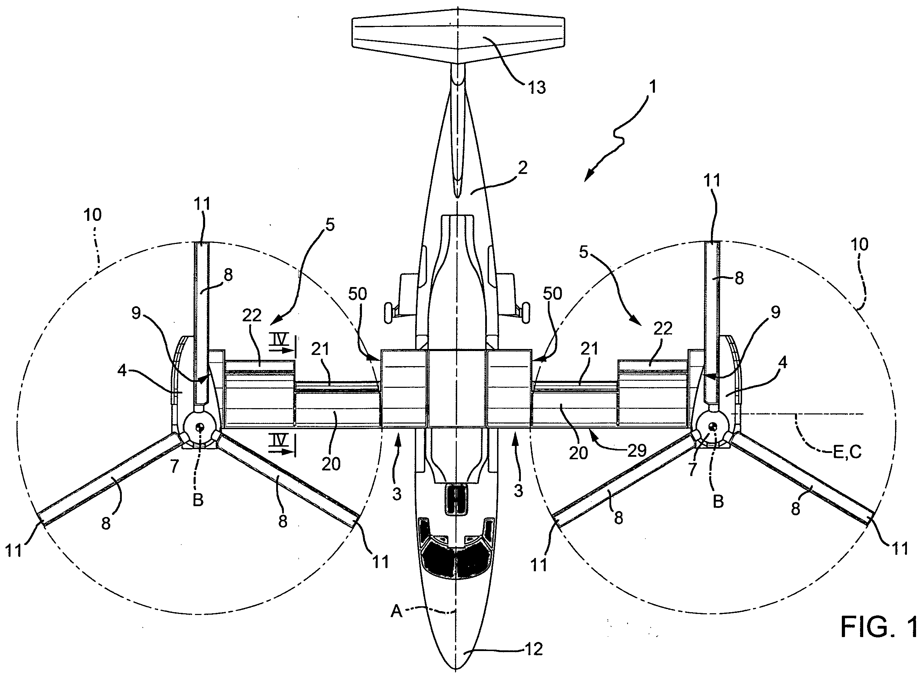

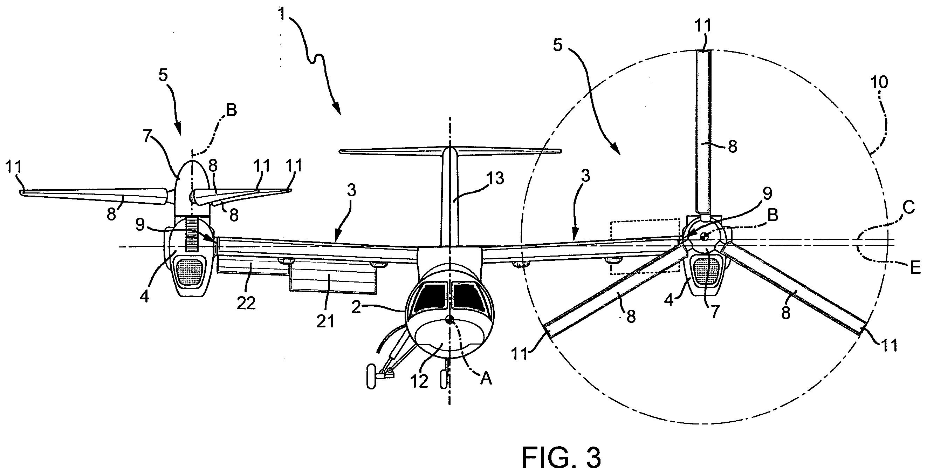

It is specified that the terms "anterior/front", "tail", "longitudinal", "lateral/side", "above", "below", and the like, used in the present description refer to a normal direction of travel of the convertiplane 1 in translated flight, as shown in Figures 1 to 3.

In greater detail, each rotor 5 essentially comprises:
- a drive shaft, not shown, rotatable around an axis B;
- a hub 7 driven into rotation by the drive shaft; and
- a plurality of blades 8 articulated on the hub 7.

The rotors 5 can be tilted around an axis C relative to the respective half-wings 3 and the respective nacelles 4.

The axis C is transversal to the axis A and to the axes B.

Furthermore, the axis C is parallel to the axis E.

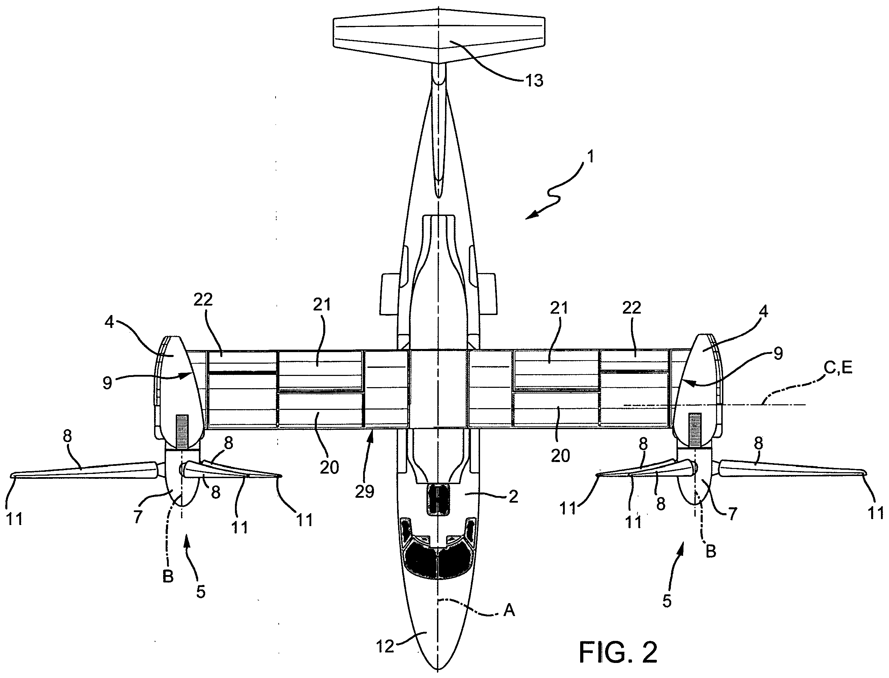

The convertiplane 1 can be selectively arranged:
- in a "helicopter" configuration (as shown in Figure 1), in which the axes B of the rotors 5 are orthogonal to the axis A and the axis C; and
- in an "airplane" configuration (as shown in Figure 2), in which the axes B of the rotors 5 are parallel to the axis A and orthogonal to the axis C.

Since the rotors 5 are identical to each other, reference will be made below to a single rotor 5.

The blades 8 extend along respective axes and comprise respective free ends 11.

The free ends 11 of the blades 8 of the rotor 5, during their rotation, describe an imaginary circumference referred to as a rotor disc 10 in the remainder of the present description.

Since the half-wings 3 are identical to each other, reference will be made below, for brevity of description, to a single half-wing 3 of the convertiplane 1.

In greater detail, the half-wing 3 comprises:
- a wingbox 20; and
- a pair of movable appendages 21, 22 articulated independently of each other on the wingbox 20, in particular hinged to the wingbox 20 around respective axes parallel to the axis E.

In particular, the movable appendages 21, 22 are arranged one after the other along the axis E, proceeding from the fuselage 2 towards the rotor 5.

With particular reference to the "helicopter" configuration shown in Figure 1, the movable appendages 21, 22 are arranged below the rotor 5.

In particular, the movable appendages 21, 22 are wholly or partly arranged within the ideal cylinder obtained by extending the rotor disc 10 parallel to the axis B.

More precisely, the movable appendage 21 is arranged below the rotor disc 10, which is the region where the blades 8 have the highest tangential speed and where the effect of the downward airflow generated by the rotor 5 is greatest.

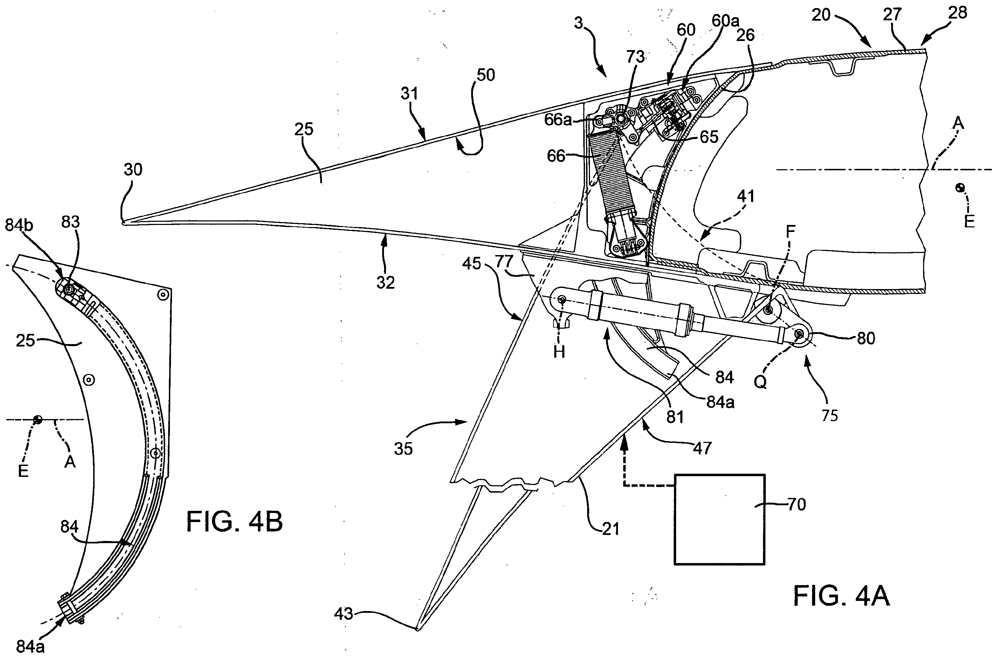

The wingbox 20 comprises (Figure 4A):
- a plurality of ribs 25 lying in respective planes orthogonal to the axis E and elongated parallel to the axis A;
- a plurality of spars 26 elongated in relation to the axis E, transversal to the ribs 25 and spaced apart from each other along the axis A; and
- a covering 27 adapted to give the wingbox 20 a wing profile 28 of the desired aerodynamic shape.

The covering 27, in turn, defines:
- a leading edge 29 facing the nose 12 and elongated along the axis E (Figures 1 and 2);
- a trailing edge 30 facing the tail portion 13, elongated along the axis E and opposite the leading edge 29 relative to the axis A (Figure 4A);
- a first surface defined in the following as the top surface 31 extending from the leading edge 29 to the trailing edge 30 and aerodynamically shaped; and
- a second surface defined in the following as the belly 32 extending from the leading edge 29 to the trailing edge 30 on the opposite side of the top surface 31 and aerodynamically shaped.

The appendages 21, 22 are arranged on the side of the trailing edge 30 of the wingbox 20.

When the convertiplane 1 is in the "airplane" configuration (Figure 2), the appendage 22 is controlled as a flaperon.

The appendage 22 is also selectively movable from a neutral position to a first raised operating position and a second lowered operating position.

In particular, by arranging one of the appendages 22 in the first raised position and the other appendage 22 in the second lowered operating position, a roll moment can be generated around the axis A on the aircraft 1.

Otherwise, by arranging both the appendages 22 in the respective first raised operating positions or second lowered operating positions, the overall lift generated by the half-wings 3 is decreased or increased, respectively.

Preferably, the appendages 22 can be selectively arranged in respective third, operating positions interposed between the respective neutral position and first raised operating positions when the convertiplane 1 exceeds a certain cruising speed, in order to define air brakes.

When the convertiplane 1 is in the "helicopter" configuration (Figure 1), the appendage 22 is arranged in a fourth lowered position.

The shift of the appendage 22 from the neutral position to the fourth lowered position occurs as a result of the transition of the convertiplane 1 from the "airplane" configuration to the "helicopter" configuration, and vice versa. Alternatively, this shift occurs when the forward speed of the convertiplane 1 drops below a threshold value.

Each appendage 21 defines a respective wing profile 35 and comprises, in turn (Figure 4A):
- an end wall 41 articulated on the wingbox 20;
- a trailing edge 43 opposite the wall 41;
- a respective aerodynamic surface defined in the following as the top surface 45 extending from the wall 41 to the trailing edge 43 and aerodynamically shaped; and
- a respective aerodynamic surface defined in the following as the belly 47 extending from the wall 41 to the trailing edge 43 on the opposite side of the top surface 45 and aerodynamically shaped.

The appendage 21 is articulated on the wingbox 20 and selectively movable between:
- a first neutral operating position (Figure 2) taken when the convertiplane 1 is in the "airplane" configuration and in which it defines an extension of the wingbox 20; and
- a second lowered operating position (Figures 1 and 4A) taken when the convertiplane 1 is in the "helicopter" configuration and in which it defines with the wingbox 20 a compartment 50 through which the downward air flow generated by the rotor 5 can pass.

In the first neutral operating position, the wing profiles 35 and 28 are contiguous with each other, and the top surface 45 and belly 47 portions adjacent to the trailing edge 43 define respective extensions of the top surface 31 and belly 32 of the wingbox 20.

In the second lowered operating position (Figure 4A), the wing profiles 35 and 28 are separated from each other, and the top surface 45 and belly 47 are separated from the top surface 31 and belly 32 of the wingbox 20, respectively.

At least the spar 26 shown in Figure 4A is curved in a plane orthogonal to the axis E, and the wall 41 of the appendage 21 faces its entire length towards the spar 26, when the appendage 21 itself is in the first neutral operating position.

The compartment 50 is open on the side opposite the leading edge 29 and bounded by a pair of ribs 25, which are arranged consecutive to each other along axis E, and by a section of the spar 26 extending between the ribs 25 parallel to the axis E.

The trailing edge 30 of the wingbox 20 is interrupted at the compartment 50.

The appendage 21 is housed, at least partly, within the compartment 50, when it is arranged in the first neutral operating position. More specifically, the wall 41 and the top surface 45 and belly 47 portions adjacent to the wall 41 are housed within the compartment 50, when the appendage 21 is arranged in the first neutral operating position.

In addition, the wall 41 has a curvature facing the trailing edge 43, proceeding from the top surface 45 to the belly 47 in a section obtained in a plane orthogonal to the axis E.

When the appendage 21 is arranged in the first neutral operating position, the air flow flowing along the wingbox 20 and the appendage 21 substantially does not undergo any interruption, optimizing the behaviour of the half-wing 3 when the convertiplane 1 is in the "airplane" configuration.

Otherwise, when the appendage 21 is arranged in the second lowered operating position, the downward air flow generated by the rotor 5 flows along the spar 26 and through the compartment 50. Hence, the appendage 21 interferes in a substantially limited way with the air flow generated by the rotor 5, optimizing the behaviour of the half-wing 3 when the convertiplane 1 is in the "helicopter" configuration (Figure 4A).

With reference to the "airplane" configuration of the convertiplane 1, the trailing edge of the half-wing 3 is defined by the trailing edge 30 of the wingbox 20, the trailing edge of the appendage 22 and the trailing edge 43 of the appendage 21.

In particular, the spar 26 has a C-shaped section in a plane orthogonal to the axis E. The spar 26 also has a curvature facing the trailing edge 30 in a plane orthogonal to the axis E, proceeding from the top surface 31 to the belly 32 of the wingbox 20 (Figure 4A).

The convertiplane 1 further comprises:
- an electronic control unit 70 (only schematically shown in Figure 4A);
- a plurality of drive mechanisms (not described in detail as they are not part of the present invention) functionally connected to the electronic control unit 70 to move the appendage 22 between the respective neutral and operating positions; and
- a pair of drive mechanisms 75 (Figure 4A) for each appendage 21, which are functionally connected to the electronic control unit 70 to move the respective appendage 21 between the first neutral operating position and the second lowered operating position.

In greater detail, the drive mechanisms 75 for each appendage 21 are arranged at respective ends of the appendage 21 opposite each other parallel to the axis E.

Each drive mechanism 75 comprises (Figure 4A):
- a lever 80 hinged to the wingbox 20 around an axis F defined by the belly 32 and hinged to the wall 41 of the appendage 21; and
- a telescopic variable-length actuator 81 controlled by the electronic control unit 70, articulated relative to an axis H located on the side of the belly 32 of the wingbox 20 in a position interposed between the spar 26 and the trailing edge 30, and hinged to the lever 80 around an axis Q.

In the case shown herein, the axes F, H and Q are parallel to each other and parallel to the axis E.

The axes H and F of each drive mechanism 75 are also located at respective brackets 77 attached to the respective rib 25.

The levers 80 of the drive mechanisms 75 are connected to each other by a bar, not shown, parallel to the axis E, in order to ensure the correct movement of the appendage 21 in the event of a failure of one of the drive mechanisms 75.

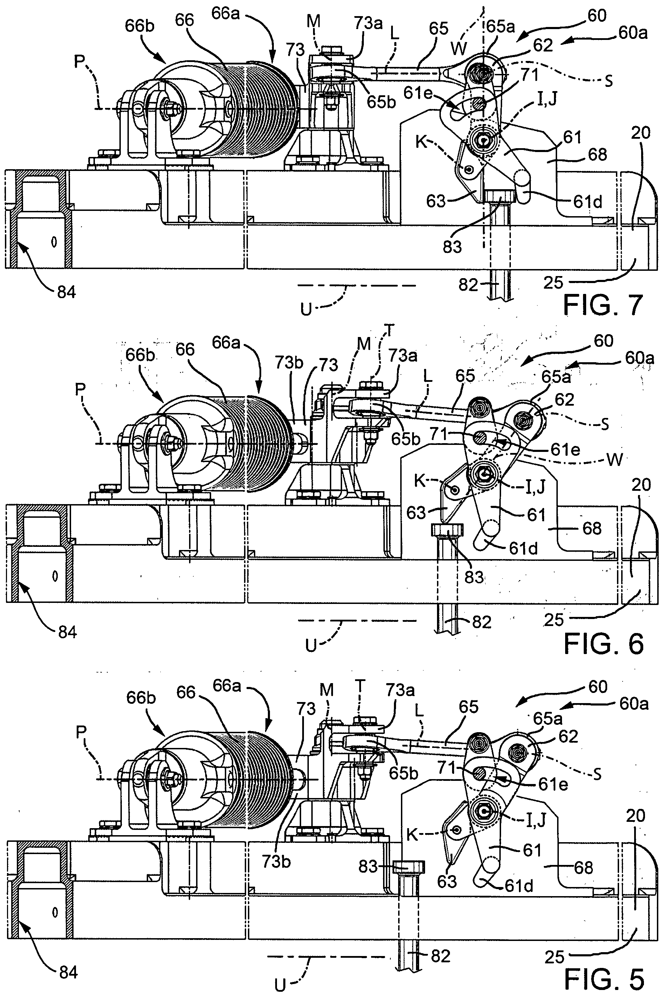

Each drive mechanism 75 also comprises (Figures 5 to 7 and 11 to 13):
- an arm 82 carried by the appendage 21 and fitted with a roller 83; and
- a groove 84 having a C-shaped section in a plane orthogonal to the axis E and defined by the wingbox 20 in a position interposed between the spar 26 and the trailing edge 30.

The roller 83 is integral with the appendage 21 and slides within the groove 84 by virtue of the movement of the appendage 21 between the first neutral operating position and the second lowered operating position. In addition, the groove 84 of each drive mechanism 75 is open on the side of the respective arm 82 and is defined by the respective rib 25 (Figure 4B).

Each groove 84 extends from an end 84b defined by the top surface 31 of the wingbox 20 to an opposite free end 84a located below the belly 32 of the wingbox 20.

More precisely, each groove 84 has a curvature facing the trailing edge 30 in a plane orthogonal to the axis E, proceeding from the respective end 84a to the respective end 84b.

Specifically, when the appendage 21 is in the first neutral operating position, the roller 83 is in a first position, in which it is arranged at or near the end 84b (Figure 4B); when the appendage 21 is in the second lowered operating position, the roller 83 is in a second position, in which it is arranged at or near the end 84a (Figure 4A).

Advantageously, the convertiplane 1 comprises two closing systems 60, each configured to elastically preload a respective appendage 21 towards the respective first neutral operating position.

The following description refers to a single closing system 60 and a related drive mechanism 75, since the other closing system 60 is identical to the one described.

The closing system 60 comprises a lever mechanism 60a selectively movable between:
- a locking position, in which it cooperates with the drive mechanism 75 to ensure that the latter maintains the appendage 21 in the first neutral operating position (Figure 7); and
- an unlocking position, in which it allows the drive mechanism 75 to move the appendage 21 from the first neutral operating position (Figure 5).

The closing system 60 further comprises elastic means 66 adapted to elastically load the lever mechanism 60a towards the locking position.

The closing system 60 is passive, i.e., it does not require any external energy input (e.g., electrical or hydraulic energy) to work, other than the energy required to operate the drive mechanism 75. In other words, it is the same movement of the drive mechanism 75 that operates the closing system 60.

The lever mechanism 60a, in turn, comprises:
- a body 73 rotatable in relation to the wingbox 20 around an axis of rotation M;
- a body 61 rotatable in relation to the wingbox 20 around an axis of rotation I and adapted to cooperate in contact with the drive mechanism 75;
- a body 62 rotatable in relation to the wingbox 20 around an axis of rotation J;
- a connecting rod 65 defining a longitudinal extension direction L of its own and comprising two ends 65a, 65b opposite each other along this direction L; and
- a trigger 63 carried by the body 62 in a rotatable manner around an axis of rotation K and also adapted to cooperate in contact with the drive mechanism 75.

The end 65a of the connecting rod 65 is operatively connected to the body 62, and the end 65b is operatively connected to the body 73.

In the embodiment shown, the axes I, J, and K are parallel to each other. The axes I and J are also coincident or substantially coincident with each other. Preferably, the axes I, J, and K are parallel to a plane defined by the rib 25. Conversely, the axis M is orthogonal to the axes I, J and K.

In addition, the direction L is transversal to the axes I, J, K, and M.

The bodies 61 and 62 are adapted to cooperate in contact with each other so that the body 62 is rotated around the axis J by the rotation of the body 61 around the axis I.

In detail, the elastic means 66 comprise a plurality of Belleville washers stacked together along a direction P. This plurality of Belleville washers comprises, as a whole, an end 66a and an end 66b opposite each other along the direction P. Specifically, the plurality of Belleville washers is attached to the wingbox 20 at the end 66b (Figures 5, 6, and 7).

In particular, the direction P lies in a plane parallel to the plane defined by the rib 25.

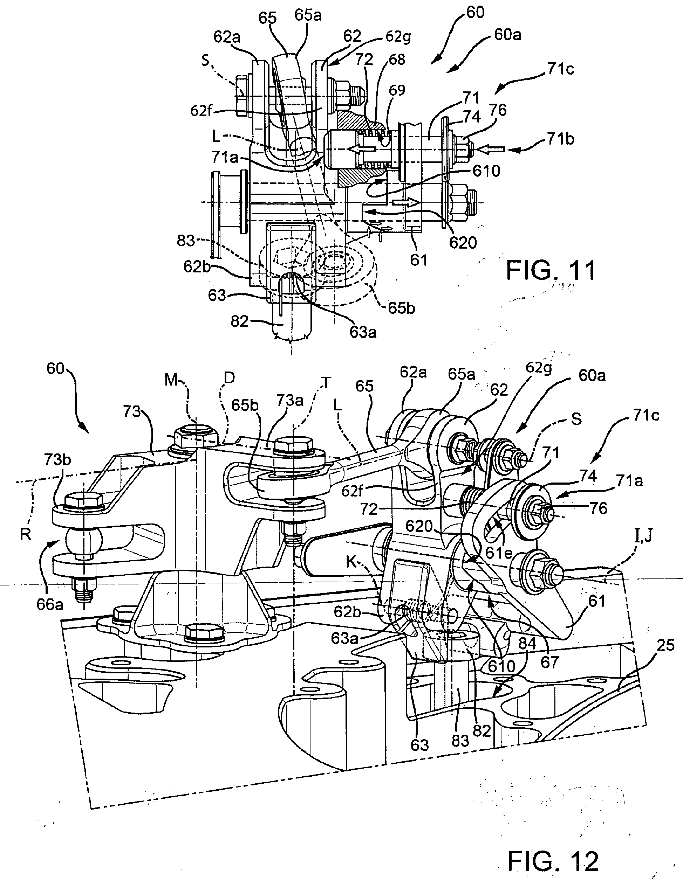

In addition, the body 73 comprises (Figure 12):
- a portion 73a, at which the connecting rod 65 is hinged around an axis of rotation T parallel to the axis M, in particular its end 65b; and
- a portion 73b, at which the plurality of Belleville washers of the elastic means 66 is operatively connected, particularly at its end 66a.

In further detail, the portion 73a and the portion 73b are angularly spaced apart from each other in relation to the axis M. In addition, the portion 73a and the portion 73b are shaped like forks.

Furthermore, the portion 73a extends along a direction D, and the portion 73b extends along a direction R. In detail, directions D and R are directed perpendicular to the axis M. In greater detail, directions D and R are incident to each other and arranged radially in relation to the axis M.

The plurality of springs of the elastic means 66 is adapted to exert on the body 73 an elastic return force towards the locking position of the lever mechanism 60a.

Specifically, the springs of the elastic means 66 are compression springs. In detail, when the appendage 21 is in the first neutral operating position, the springs of the elastic means 66 are compressed with a preload value that tends to cause them to expand parallel to the direction P.

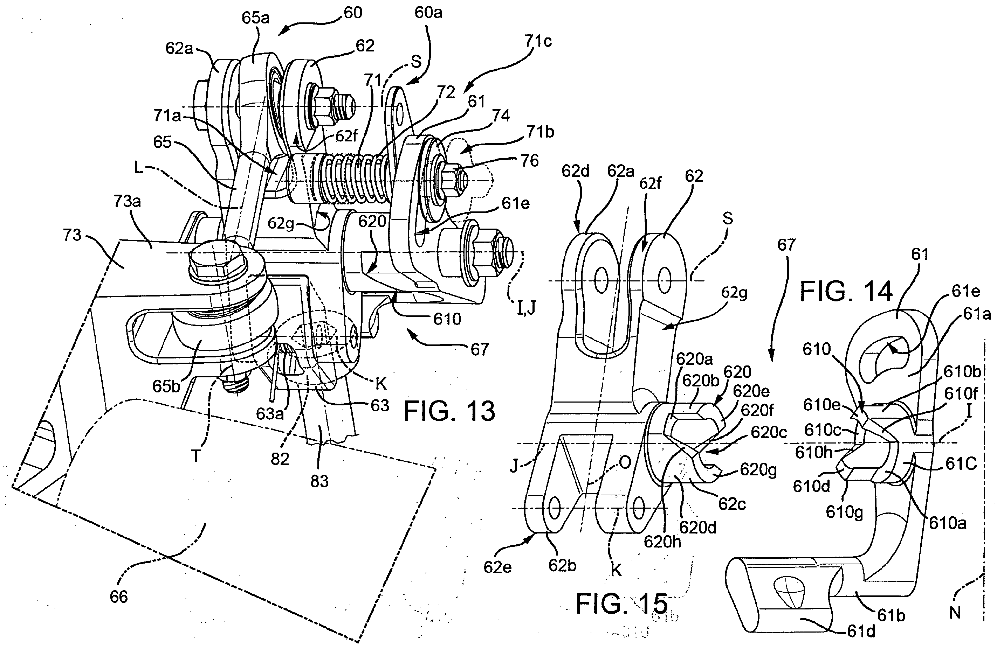

The body 61 comprises (Figure 14):
- a portion 61a extending predominantly along a direction N perpendicular to the axis I;
- a portion 61b, protruding from the portion 61a parallel or substantially parallel to the axis I; and
- a coupling portion 61c, which also protrudes parallel or substantially parallel to the axis I and is interposed between the portion 61a and the portion 61b along the direction N.

In further detail, the portion 61b and the coupling portion 61c protrude from the side of the portion 61a facing the body 62. The portion 61b protrudes parallel to the axis I beyond the coupling portion 61c from the portion 61a. In addition, the portion 61c has a circular shape in a plane perpendicular to the axis I and is arranged coaxially with the axis I.

In addition, considering a plane passing through the axis I and along the direction N, the body 61 has an L-shape in that plane.

In the embodiment shown, the portion 61b comprises an element 61d at one end of the portion 61b opposite the portion 61a parallel to the axis I. In detail, the portion 61d has a prismatic or substantially prismatic shape.

The body 61 also comprises a through opening 61e in the portion 61a, in particular opposite the portion 61b along the direction N in relation to the coupling portion 61c.

In detail, the opening 61e passes parallel to the axis I and is shaped like a slot. In greater detail, the opening 61e is curved and has a concavity facing the portion 61b.

In the embodiment shown, proceeding parallel to the direction N in the direction from the opening 61e to the portion 61b, the extension of the portion 61a in a plane perpendicular to the axis I and parallel to the direction N gradually decreases.

The body 62 comprises (Figure 15):
- a portion 62a, at which the connecting rod 65 is hinged around an axis of rotation S parallel to the axis J, in particular its end 65a;
- a portion 62b, at which the trigger 63 is hinged around the axis K; and
- a coupling portion 62c, protruding parallel or substantially parallel to the axis J in relation to the portions 62a and 62b.

In detail, the body 62 extends predominantly along a direction O perpendicular to the axes J and K and comprises an end 62d and an end 62e opposite each other along this direction O. In further detail, the portions 62a and 62b are shaped like forks and are each arranged at a respective end 62d, 62e.

The coupling portion 62c is interposed between the portions 62a and 62b along the direction O. In particular, the coupling portion 62c has a circular shape in a plane perpendicular to the axis J and is arranged coaxially with the axis J. In addition, the coupling portion 62c protrudes towards the body 61.

The body 62 further comprises (Figure 15):
- a portion 62f extending along the thickness of the body 62 parallel to the axis J; and
- a surface 62g orthogonal or substantially orthogonal to the axis J and facing the body 61.

In detail, the body 62 can rotate around the axis J in a first direction of rotation (anticlockwise in the configuration shown in Figure 12) or in a second direction of rotation (clockwise in the configuration shown in Figure 12). In further detail, the rotation of the body 62 in the first direction of rotation corresponds to a decrease in the return force of the elastic means 66; the rotation of the body 62 in the second direction of rotation corresponds to an increase in the return force of the elastic means 66.

As shown in Figures 14 and 15, the body 61 comprises a coupling surface 610 at the coupling portion 61c, and the body 62 comprises a coupling surface 620 at the coupling portion 62c. The coupling surface 620 is adapted to cooperate in contact with the coupling surface 610.

Therefore, the coupling surfaces 610 and 620 define a form-fit coupling 67.

In detail, the coupling surface 610 comprises, proceeding along a circumferential direction relative to the axis I:
- a section 610a, which is planar and directed perpendicular to the axis I;
- a section 610b protruding relative to the section 610a parallel to the axis I;
- a section 610c, which is planar and directed perpendicular to the axis I; and
- a section 610d protruding relative to the section 610c parallel to the axis I.

In detail, the sections 610a and 610c are coplanar with each other.

The section 610b, in turn, comprises:
- a portion 610e, which is planar and directed perpendicular to the axis I; and
- a portion 610f adjacent to the portion 610e along the circumferential direction.

In particular, proceeding in the direction from the section 610a to the section 610b, the distance of the points of the portion 610f from the section 610a parallel to the axis I gradually increases. In other words, the portion 610f is shaped like a ramp.

Similarly, the section 610d comprises:
- a portion 610g, which is planar and directed perpendicular to the axis I; and
- a portion 610h adjacent to the portion 610g along the circumferential direction.

In particular, proceeding in the direction from the section 610c to the section 610d, the distance of the points of the portion 610h from the section 610c parallel to the axis I gradually increases. In other words, the portion 610h is shaped like a ramp.

In addition, the portions 610e and 610g are coplanar with each other and parallel to the sections 610a and 610c.

Similarly, the coupling surface 620 comprises, proceeding along a circumferential direction relative to the axis J:
- a section 620a, which is planar and directed perpendicular to the axis J;
- a section 620b protruding relative to the section 620a parallel to the axis J;
- a section 620c, which is planar and directed perpendicular to the axis J; and
- a section 620d protruding relative to the section 620c parallel to the axis J.

In detail, the sections 620a and 620c are coplanar with each other.

The section 620b, in turn, comprises:
- a portion 620e, which is planar and directed perpendicular to the axis J; and
- a portion 620f adjacent to the portion 620e along the circumferential direction.

In particular, proceeding in the direction from the section 620a to the section 620b, the distance of the points of the portion 620f from the section 620a parallel to the axis J gradually decreases. In other words, the portion 620f is shaped like a ramp.

Similarly, the section 620d comprises:
- a portion 620g, which is planar and directed perpendicular to the axis I; and
- a portion 620h adjacent to the portion 620g along the circumferential direction.

In particular, proceeding in the direction from the section 620c to the section 620d, the distance of the points of the portion 620h from the section 620c parallel to the axis J gradually decreases. In other words, the portion 620h is shaped like a ramp.

In addition, the portions 620e and 620g are coplanar with each other and parallel to the sections 620a and 620c.

As shown in Figure 13, the coupling portions 61c and 62c are engaged together so that:
- the section 610a faces the section 620d;
- the section 610b faces the section 620a;
- the section 610c faces the section 620b; and
- the section 610d faces the section 620c.

In detail, the portion 610h is adapted to slide in contact against the portion 620f, and the portion 610f is adapted to slide in contact against the portion 620h.

As shown in Figures 6 and 7, it is also possible to define a direction W passing through the axis S and the axes I, J.

As shown in Figures 5, 6 and 7, the trigger 63 is interposed between the elastic means 66 and the element 61d along a direction U parallel to the plane defined by the rib 25. In particular, the trigger 63 faces, at least partially, the element 61d.

The trigger 63 is adapted to rotate around the axis K between a first angular position and a second angular position. The trigger 63 in the first angular position is adapted to contact a region of the portion 62b, which acts as an end stop; the trigger 63 in the second angular position is angularly spaced from the aforementioned region of the portion 62b.

Therefore, the trigger 63 is adapted to rotate relative to the body 62 around the axis K in the direction oriented from the second angular position to the first angular position (anticlockwise in the arrangement shown in Figures 5, 6 and 7) only up to the first angular position.

In addition, the closing system 60 comprises elastic means 63a adapted to elastically preload the trigger 63 towards the first angular position. In detail, the elastic means 63a are adapted to elastically preload the trigger 63 in a direction of rotation around the axis K that brings it closer to the element 61d.

In detail, the elastic means 63a comprise a helical spring arranged coaxially with the axis K (Figure 11).

In the embodiment shown, the trigger 63 comprises a body in the shape of a right prism with a rhomboidal base, the height direction of which is arranged parallel to the axis K.

In detail, the trigger 63 is adapted to cooperate in contact with the roller 83 so as to exert thereon an action such as to force the drive mechanism 75 to hold the appendage 21 in the first neutral operating position.

In greater detail, when the appendage 21 is in the first neutral operating position, the trigger 63 is adapted to exert on the roller 83 a force perpendicular or substantially perpendicular to the roller 83 (Figure 7). In addition, preferably, when the appendage 21 is in the first neutral operating position, the surface of the trigger 63 in contact with the roller 83 is parallel or substantially parallel to the direction W.

When the appendage 21 is moved from the first neutral operating position to the second lowered operating position, the trigger 63 is adapted to exert a gradually decreasing force on the roller 83.

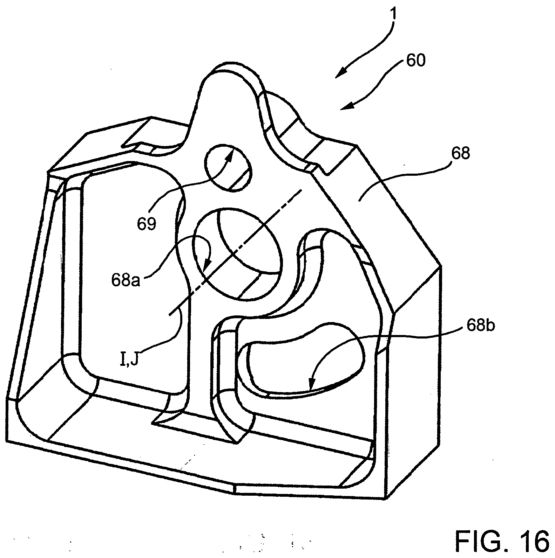

The closing system 60 also comprises:
- a body 68 fixed in relation to the wingbox 20 and comprising a seat 69 (Figures 11 and 16); and
- a pin 71, which slidably engages the seat 69.

The pin 71 is selectively movable between:
- a first position, in which it limits the rotation of the body 62 around the axis J in the first direction of rotation; and
- a second position, in which it allows the body 62 to rotate around the axis J in the first direction of rotation.

In detail, the pin 71 extends parallel to the axis I and is movable between the first position and the second position parallel to the axis I.

The body 68 is at least partially interposed between the body 61 and the body 62 parallel to the axis I (Figure 11).

The seat 69 passes through the body 68 parallel to the axis I and is engaged along its entire extension by the pin 71. Preferably, the seat 69 comprises a circular hole.

In addition, the pin 71 constantly engages the opening 61e. Specifically, the pin 71 slides along the opening 61e during the rotation of the body 61 around the axis I.

The pin 71 comprises, in particular, an end 71a and an end 71b opposite each other parallel to the axis J. The pin 71 is adapted to engage the seat 69 on the side of the end 71a and the opening 61e on the side of the end 71b (Figure 11).

In detail, the pin 71 in the first position is adapted to partially protrude from the seat 69 on the side of the latter facing the body 62; the pin 71 in the second position is retracted in the seat 69.

In further detail, the pin 71 in the first position is adapted to contact the region 62f, acting as a stop. In addition, when the appendage 21 is in the first neutral operating position, the pin 71 abuts against the surface 62g.

The closing system 60 also comprises axial locking means 71c adapted to limit the translation of the pin 71 from the second position to the first position. In detail, the axial locking means 71c comprise a washer 74 arranged on the side of the pin 71 opposite the end 71a relative to the opening 61e, and a nut 76 engaging the pin 71 on the side of the end 71b.

The closing system 60 further comprises elastic means 72 adapted to elastically load the pin 71 towards the first position. In detail, the elastic means 72 comprise a spiral spring that is at least partially wound around the pin 71 (Figures 11 to 13).

The body 68 is also adapted to rotationally support the bodies 61 and 62. For this purpose, the body 68 comprises (Figure 16):
- a hole 68a, at which the body 62 is hinged to the body 68 around the axis J; and
- an opening 68b, which is adapted to be slidably engaged by the element 61d.

The operation of the convertiplane 1 is described in detail below, starting with the "helicopter" configuration of the convertiplane 1 itself shown in Figure 1 and referring to a single half-wing 3.

In this condition, the axis B of the rotor 5 is orthogonal to the axes A and C, and the portion of the half-wing 3 defining the appendages 21, 22 is hit by the downward flow generated by the rotor 5 itself. This downward flow generates the lift required to allow the convertiplane 1 to be lifted into flight in the "helicopter" configuration.

In addition, the compartment 50 of the wingbox 20 is arranged below the rotor disc 10, which is the region in which this flow generated by the rotor 5 is most intense.

In this "helicopter" configuration, the appendage 21 is arranged in the second lowered operating position (Figure 4A) and the appendage 22 is arranged in the fourth lowered position.

Due to the fact that the appendage 21 is arranged in the second lowered operating position, the downward air flow generated by the rotor 5 flows through the compartment 50 freed by the appendage 21. In detail, this air flow flows substantially undisturbed along the spar 26 and the top surface 45 of the appendage 21.

In addition, in this configuration, the sections 610a and 610c of the coupling surface 610 are in contact with the sections 620d and 620b of the coupling surface 620, respectively.

When the pilot or an autopilot system, not shown, controls the transition of the convertiplane 1 from the "helicopter" configuration to the "airplane" configuration, the rotors 5 are rotated 90 degrees towards the nose portion 12 of the fuselage 2 around the axis C, and the electronic control unit 70 causes the appendage 21 to move from the second lowered operating position (Figure 4A) to the first neutral operating position (Figure 2) via the drive mechanism 75.

In detail, the electronic control unit 70 controls, starting from the condition in Figure 4A, the activation of the actuators 81. This causes clockwise rotation of the levers 80 around the axis F as shown in Figure 4A and the consequent clockwise rotation of the appendage 21.

As the appendage 21 rotates from the second lowered operating position to the first neutral operating position, the roller 83 slides along the grooves 84 in the direction oriented from the end 84a to the end 84b (Figure 4B).

When approaching the end 84b, the roller 83 contacts the trigger 63 on its side opposite the element 61d, causing it to rotate around the axis K (Figure 5), then passes over it (Figure 6) and positions itself on the side of the trigger 63 facing the element 61d (Figure 7).

Once the trigger 63 is passed over by the roller 83 in its travel towards the end 84b, it is returned by the elastic means 63a to the first angular position. After having come into contact with the trigger 63, still while the roller 83 is approaching the end 84b, the roller 83 comes into contact with the element 61d, causing the body 61 to rotate around the axis I. In particular, the rotation of the body 61 occurs anticlockwise in the configuration shown in Figures 5, 6 and 7.

During the rotation of the body 61, the coupling surfaces 610 and 620 cooperate with each other, causing the body 62 to rotate around the axis J.

In particular, during a first phase of the rotation of the body 61, the body 62 is angularly fixed relative to the axis J, because the rotation in the first direction is prevented by the pin 71, which acts as a stop.

During this first phase of the rotation of the body 61, the portion 610h slides in contact against the portion 620f, and the portion 610f slides in contact against the portion 620h, causing the body 61 to gradually move away from the body 62 parallel to the axis I.

In addition, during this first phase of the rotation of the body 61, the pin 71 slides along the opening 61e. In greater detail, by virtue of the distancing of the body 61 from the body 62 and the presence of the washer 74 and the nut 76, the pin 71 is retracted inside the seat 69, passing from the first position to the second position.

Once the pin 71 has reached the second position, it allows the rotation of the body 62 around the axis J in the first direction of rotation (in particular, anticlockwise in the configuration shown in Figures 5, 6 and 7). In detail, the axial locking means 71c prevent the pin 71 from interfering with the rotation of the body 62 while the pin 71 is in the second position.

During a second phase of the rotation of the body 61 following the first, in which the rotation of the body 62 around the axis J is possible, the coupling surfaces 610 and 620 slide over each other again. In addition, during the rotation of the body 62, the body 61 gradually reapproaches the body 62 parallel to the axis I.

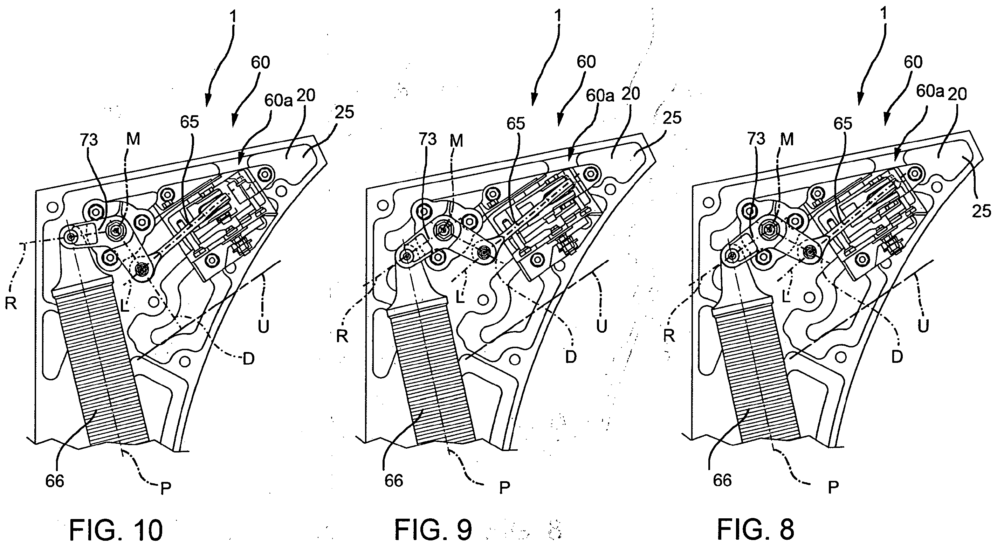

By virtue of the rotation of the body 62, the connecting rod 65 rotates the body 73 around the axis M, particularly clockwise in the configuration shown in Figures 8, 9 and 10, resulting in an elongation of the elastic means 66 along the direction P (Figure 10). In addition, by virtue of the action of the elastic means 63a, the trigger 63 rotates integrally or substantially integrally with the body 62.

At the end of the rotation of the body 62, the trigger 63 is in contact with the roller 83, preventing it from sliding towards the end 84a (Figure 7). In particular, the trigger 63 is in contact with the roller 83 and presses against it as a result of the action of the elastic means 66.

Moreover, at the end of the rotation of the body 62, the elastic means 66 elastically load the body 73 towards the locking position of the lever mechanism 60a, due to the elastic preload of the elastic means 66.

In this condition, the direction W is parallel or substantially parallel to the roller 83, and the trigger 63 exerts a perpendicular or substantially perpendicular force on the roller 83 (Figure 7).

At this point, the convertiplane 1 is in the "airplane" configuration and the appendage 21 is in the first neutral operating position, in which it is kept efficiently and robustly by the effect of the trigger 63 and the elastic means 66. In this first neutral operating position, the wall 41 of the appendage 21 faces the spar 26, and the appendage 21 engages the compartment 50. In other words, the appendage 21 defines an extension of the wingbox 20, and the air flow flowing along the wingbox 20 and the appendage 21 substantially does not undergo any interruption.

If it is necessary to operate the convertiplane 1 in the "helicopter" configuration, the rotors 5 are rotated 90 degrees towards the tail portion 13 of the fuselage 2 around the axis C, and the electronic control unit 70 causes the appendage 21 to move from the first neutral operating position (Figure 2) to the second lowered operating position (Figure 4A) via the drive mechanism 75.

In detail, the electronic control unit 70 controls the activation of the actuators 81. This causes anticlockwise rotation of the levers 80 around the axis F as shown in Figure 4A and the consequent anticlockwise rotation of the appendage 21.

As the appendage 21 rotates from the first neutral operating position to the second lowered operating position, the roller 83 slides along the grooves 84 in the direction oriented from the end 84b to the end 84a (Figure 5).

The roller 83, while sliding, pushes on the trigger 63 on the side of the latter facing the element 61b, pushing it into contact with the region of the portion 62b which acts as an end stop and holding it in the first angular position. This causes the trigger 63 to rotate integrally with the body 62 around the axis J (in particular, clockwise in the configuration shown in Figures 5, 6 and 7).

The rotation of the body 62, in turn, causes both the rotation of the body 61 by means of the coupling surfaces 610 and 620, and the rotation of the body 73 around the axis M by means of the connecting rod 65. In detail, the rotation of the body 73 (in particular, anticlockwise in the configuration shown in Figures 8, 9 and 10) results in compression of the elastic means 66 parallel to the direction P.

During the travel of the roller 83 towards the end 84a, in addition, the direction W forms with the roller 83 an angle less than 90°, which gradually increases until the roller 83 passes over the trigger 63 and positions itself on the side of the trigger 63 opposite the element 61d along the direction U (Figure 5). As a result, during the travel of the roller 83 towards the end 84a, the action exerted by the trigger 63 on the roller 83 gradually decreases. In detail, the component of the action exerted by the trigger 63 in the direction perpendicular to the roller 83 gradually decreases as a result of the tilt of the lever mechanism 60a (and in particular, of the bodies 61 and 62) in relation to the roller 83.

At the same time, during the movement of the appendage 21 from the first neutral operating position to the second lowered operating position, the angle between the directions D and L gradually decreases. For this reason too, the magnitude of force exerted by the trigger 63 on the roller 83 gradually decreases, although at the same time the extension of the elastic means 66 parallel to the direction P decreases.

In addition, still during the travel of the roller 83 towards the end 84a, the rotation of the body 62 in the second direction of rotation (clockwise in Figures 5, 6 and 7) allows the pin 71 to return to the first position.

The advantages enabled by the convertiplane 1 according to the present invention will be apparent from an examination of the features thereof.

In particular, since the convertiplane 1 comprises the closing systems 60, which are configured to elastically preload the respective appendages 21 towards the respective first neutral operating positions, it is possible to hold the appendages 21 in the respective first neutral positions when the convertiplane 1 is in the "airplane" configuration in a simple and safe way. This ensures aeroelastic stability of the convertiplane 1, even in the event of failure of the drive mechanisms 75.

In addition, the appendage 21 is held in the first neutral operating position by means of the lever mechanism 60a, which interacts with the roller 83, and by means of the elastic means 66. As a result, the closing system 60 is a passive system, as it does not require any external energy input to work.

Furthermore, the trigger 63 is adapted to exert its action on the drive mechanism 75, and in particular on the roller 83, with a decreasing intensity as the appendage 21 moves from the first neutral operating position. In this way, the closing system 60 not only allows the appendage 21 to be held in the first neutral operating position and aeroelastic stability to be ensured, but also allows the appendage 21 to be moved to the second lowered operating position if necessary. In fact, due to the fact that the intensity of the force exerted by the trigger 63 on the roller 83 gradually decreases, the drive mechanism 75 manages to complete the movement of the appendage 21 to the second lowered operating position despite the fact that the elastic return force exerted by the elastic means 66 increases simultaneously.

Therefore, the closing system 60 is reversible, i.e., it allows the appendage 21 to be moved repeatedly and if necessary from the first neutral operating position to the second lowered operating position, and vice versa.

Since the closing system 60 comprises the axial locking means 71c, it is possible to limit the interference of the pin 71 with the body 62 when the pin 71 is in the second position.

It is clear that modifications and variations can be made to the convertiplane 1 described and illustrated herein without thereby departing from the scope of protection defined by the claims.

In particular, the top surface 45 of the appendage 21 could define an extension of the spar 26 when the appendage 21 is in the second lowered operating position.

Moreover, the convertiplane 1 could comprise an additional closing system configured to elastically preload each appendage 22 towards the respective neutral operating position.

The appendages 21 could be selectively arranged in respective third raised operating positions when the convertiplane 1 exceeds a certain cruising speed, in order to define air brakes.

The elastic means 66 could comprise a helical spring or a pneumatic piston as an alternative to the Belleville washers.

## Claims

1. A convertiplane (1) comprising:
- a fuselage (2) extending along a first axis (A);
- a pair of half-wings (3) projecting cantilevered from respective sides of said fuselage (2);
- a pair of nacelles (4) housing respective engines and operatively connected to said half-wings (3); and
- a pair of rotors (5) associated with said half-wings (3), rotatable around respective second axes (B) and tiltable around a third axis (C) transversal to said first axis (A) and the related second axis (B) between:
a first position, in which said second axes (B) are parallel to said first axis (A) and which is reached when said convertiplane (1) is in an airplane configuration; and
a second position, in which said second axes (B) are orthogonal to said first axis (A) and said third axis (C) and which is reached when said convertiplane (1) is in a helicopter configuration;
each said half-wing (3) further comprising a wingbox (20) and at least one appendage (21) articulated on said wingbox (20) and selectively movable between:
- a relative first neutral operating position taken when said convertiplane (1) is in said airplane configuration and in which it defines an extension of said wingbox (20) along said first axis (A); and
- a relative second operating position taken when said convertiplane (1) is in said helicopter configuration and in which the downward air flow generated by the respective rotor (5) can flow through a compartment (50) of said half-wing (3) freed by the appendage (21);
**characterized in that** it comprises a closing system (60) configured to elastically preload a respective said appendage (21) towards the respective first neutral operating position.

2. The convertiplane according to claim 1, comprising at least one drive mechanism (75) for each said appendage (21);
each said drive mechanism (75) being adapted to move the respective said appendage (21) between the relative first neutral operating position and the relative second operating position;
**characterized in that** said closing system (60) comprises a lever mechanism (60a) selectively movable between:
- a locking position, in which it cooperates, in use, with one said drive mechanism (75) to ensure that the latter maintains the relative said appendage (21) in said first neutral operating position; and
- an unlocking position, in which it allows said drive mechanism (75) to move, in use, the relative said appendage (21) from said first neutral operating position;
said closing system (60) further comprising first elastic means (66) adapted to elastically load said lever mechanism (60a) towards said locking position.

3. The convertiplane according to claim 2, wherein said lever mechanism (60a) comprises, in turn:
- a first body (73) rotatable in relation to said wingbox (20) around a first axis of rotation (M); said first body (73) being operatively connected to said first elastic means (66);
- a second body (61) rotatable in relation to said wingbox (20) around a second axis of rotation (I); said second body (61) being adapted to cooperate in contact with said drive mechanism (75); and
- a third body (62) rotatable in relation to said wingbox (20) around a third axis of rotation (J);
said second body (61) and third body (62) being adapted to cooperate with each other; said third body (62) being rotatable, in use, as a result of the rotation of said second body (61);
said lever mechanism (60a) further comprising a connecting rod (65); said connecting rod (65) defining a longitudinal extension direction (L) thereof and comprising a first end (65a) and a second end (65b) opposite each other along said longitudinal extension direction (L);
wherein one of said first end (65a) and second end (65b) is operatively connected to said first body (73) and the other of said first end (65a) and second end (65b) is operatively connected to said third body (62).

4. The convertiplane according to claim 3, wherein said lever mechanism (60a) also comprises a trigger (63) carried by said third body (62) in a rotational manner around a third axis of rotation (K) and adapted to cooperate in contact with said drive mechanism (75);
said trigger (63) being adapted, in use, to exert an action on said drive mechanism (75) such that it forces said drive mechanism (75) to maintain said appendage (21) in said first neutral operating position.

5. The convertiplane according to claim 4, wherein said trigger (63) is adapted to exert said action on said drive mechanism (75) with a decreasing intensity when, in use, said drive mechanism (75) moves said appendage (21) from said first neutral operating position to said second operating position.

6. The convertiplane according to any one of claims 3 to 5, wherein said second body (61) comprises a first coupling surface (610), and said third body (62) comprises a second coupling surface (620) adapted to cooperate in contact with said first coupling surface (610);
said first coupling surface (610) and said second coupling surface (620) defining a form-fit coupling (67).

7. The convertiplane according to any one of claims 3 to 6, wherein said closing system (60) further comprises a fourth body (68) fixed in relation to said wingbox (20) and comprising a seat (69) and a pin (71), which slidably engages said seat (69) and is selectively movable between:
- a first position, in which it is adapted to prevent said third body (62) from rotating around said third axis of rotation (J) in a first direction of rotation; and
- a second position, in which it is adapted to allow said third body (62) to rotate around said third axis of rotation (J) in said first direction of rotation.

8. The convertiplane according to claim 7, wherein said first elastic means (66), in use, exert on said first body (73) an elastic return force towards said locking position;
said first elastic means (66) being of the compression type; said first elastic means (66) being pre-loaded with a preload value when said appendage (21) is in said first neutral operating position;
wherein the rotation of said third body (62) in said first direction of rotation corresponds, in use, to a decrease in said elastic return force, and the rotation of said third body (62) in a second direction of rotation opposite said first direction of rotation corresponds, in use, to an increase in said elastic return force.

9. The convertiplane according to claim 7 or 8, wherein said closing system (60) also includes third elastic means (72) adapted to elastically load said pin (71) towards said first position.

10. The convertiplane according to any one of claims 7 to 9, wherein said second body (62) comprises an opening (61e) ;
said pin (71) engaging said opening (61e) and being adapted, in use, to slide along said opening (61e) during the rotation of said second body (61) around said second axis of rotation (I);
said closing system (60) further comprising axial locking means (71c) adapted to limit the translation of said pin (71) in the direction from said second position to said first position.

## Patentansprüche

1. Verwandlungsflugzeug (1), das Folgendes umfasst:
- einen Rumpf (2), der sich entlang einer ersten Achse (A) erstreckt;
- ein Paar Halbflügel (3), die von jeweiligen Seiten des Rumpfs (2) freitragend vorstehen;
- ein Paar Gondeln (4), die jeweilige Triebwerke aufnehmen und mit den Halbflügeln (3) betriebstechnisch verbunden sind; und
- ein Paar Rotoren (5), die den Halbflügeln (3) zugeordnet sind, um jeweilige zweite Achsen (B) drehbar sind und um eine dritte Achse (C), die zur ersten Achse (A) und zur zugehörigen zweiten Achse (B) quer verläuft, neigbar sind zwischen:
einer ersten Position, in der die zweiten Achsen (B) zur ersten Achse (A) parallel sind und die erreicht wird, wenn sich das Verwandlungsflugzeug (1) in einer Flugzeugkonfiguration befindet; und
einer zweiten Position, in der die zweiten Achsen (B) zur ersten Achse (A) und zur dritten Achse (C) senkrecht sind und die erreicht wird, wenn sich das Verwandlungsflugzeug (1) in einer Hubschrauberkonfiguration befindet;
wobei jeder Halbflügel (3) ferner umfasst: einen Flügelkasten (20) und mindestens einen Fortsatz (21), der auf dem Flügelkasten (20) angelenkt ist und wahlweise beweglich ist zwischen:
- einer zugehörigen ersten neutralen Betriebsposition, die eingenommen wird, wenn sich das Verwandlungsflugzeug (1) in der Flugzeugkonfiguration befindet, und in der er eine Erweiterung des Flügelkastens (20) entlang der ersten Achse (A) definiert; und
- einer zugehörigen zweiten Betriebsposition, die eingenommen wird, wenn sich das Verwandlungsflugzeug (1) in der Hubschrauberkonfiguration befindet, und in der der Luftstrom nach unten, der durch den jeweiligen Rotor (5) erzeugt wird, durch eine Kammer (50) des Halbflügels (3) strömen kann, die durch den Fortsatz (21) freigelegt wird;
**dadurch gekennzeichnet, dass** es ein Schließsystem (60) umfasst, das konfiguriert ist, einen jeweiligen Fortsatz (21) in Richtung der jeweiligen ersten neutralen Betriebsposition elastisch vorzubelasten.

2. Verwandlungsflugzeug nach Anspruch 1, das mindestens einen Antriebsmechanismus (75) für jeden Fortsatz (21) umfasst;
wobei jeder Antriebsmechanismus (75) ausgelegt ist, den jeweiligen Fortsatz (21) zwischen der zugehörigen ersten neutralen Betriebsposition und der zugehörigen zweiten Betriebsposition zu bewegen;
**dadurch gekennzeichnet, dass** das Schließsystem (60) einen Hebelmechanismus (60a) umfasst, der wahlweise beweglich ist zwischen:
- einer Verriegelungsposition, in der er im Gebrauch mit einem Antriebsmechanismus (75) zusammenwirkt, um sicherzustellen, dass letzterer den zugehörigen Fortsatz (21) in der ersten neutralen Betriebsposition hält; und
- einer Entriegelungsposition, in der er ermöglicht, dass der Antriebsmechanismus (75) im Gebrauch den zugehörigen Fortsatz (21) aus der ersten neutralen Betriebsposition bewegt;
wobei das Schließsystem (60) ferner erste elastische Mittel (66) umfasst, die ausgelegt sind, den Hebelmechanismus (60a) in Richtung der Verriegelungsposition elastisch zu belasten.

3. Verwandlungsflugzeug (1) nach Anspruch 2, wobei der Hebelmechanismus (60a) seinerseits Folgendes umfasst:
- einen ersten Körper (73), der in Bezug auf den Flügelkasten (20) um eine erste Drehachse (M) drehbar ist; wobei der erste Körper (73) mit den ersten elastischen Mitteln (66) betriebstechnisch verbunden ist;
- einen zweiten Körper (61), der in Bezug auf den Flügelkasten (20) um eine zweite Drehachse (I) drehbar ist; wobei der zweite Körper (61) ausgelegt ist, in Kontakt mit dem Antriebsmechanismus (75) zusammenzuwirken; und
- einen dritten Körper (62), der in Bezug auf den Flügelkasten (20) um eine dritte Drehachse (J) drehbar ist;
wobei der zweite Körper (61) und der dritte Körper (62) ausgelegt sind, miteinander zusammenzuwirken; wobei der dritte Körper (62) im Gebrauch als ein Ergebnis der Drehung des zweiten Körpers (61) drehbar ist;
wobei der Hebelmechanismus (60a) ferner eine Verbindungsstange (65) umfasst; wobei die Verbindungsstange (65) eine Längsausdehnungsrichtung (L) davon definiert und ein erstes Ende (65a) und ein zweites Ende (65b) umfasst, die einander in der Längsausdehnungsrichtung (L) gegenüberliegen;
wobei eines des ersten Endes (65) und des zweiten Endes (65b) mit dem ersten Körper (73) betriebstechnisch verbunden ist und das andere des ersten Endes (65) und des zweiten Endes (65b) mit dem dritten Körper (62) betriebstechnisch verbunden ist.

4. Verwandlungsflugzeug nach Anspruch 3, wobei der Hebelmechanismus (60a) außerdem einen Auslöser (63) umfasst, der auf eine um eine dritte Drehachse (K) drehende Weise durch den dritten Körper (62) getragen wird und ausgelegt ist, in Kontakt mit dem Antriebsmechanismus (75) zusammenzuwirken;
wobei der Auslöser (63) ausgelegt ist, im Gebrauch eine Wirkung auf den Antriebsmechanismus (75) auszuüben, derart, dass er den Antriebsmechanismus (75) zwingt, den Fortsatz (21) in der ersten neutralen Betriebsposition zu halten.

5. Verwandlungsflugzeug nach Anspruch 4, wobei der Auslöser (63) ausgelegt ist, die Wirkung auf den Antriebsmechanismus (75) mit abnehmender Intensität auszuüben, wenn der Antriebsmechanismus (75) im Gebrauch den Fortsatz (21) aus der ersten neutralen Betriebsposition in die zweite Betriebsposition bewegt.

6. Verwandlungsflugzeug nach einem der Ansprüche 3 bis 5, wobei der zweite Körper (61) eine erste Kopplungsfläche (610) umfasst und der dritte Körper (62) eine zweite Kopplungsfläche (620) umfasst, die ausgelegt ist, in Kontakt mit der ersten Kopplungsfläche (610) zusammenzuwirken;
wobei die erste Kopplungsfläche (610) und die zweite Kopplungsfläche (620) eine Formschlusskopplung (67) definieren.

7. Verwandlungsflugzeug nach einem der Ansprüche 3 bis 6, wobei das Schließsystem (60) ferner einen vierten Körper (68) umfasst, der in Bezug auf den Flügelkasten (20) befestigt ist und eine Aufnahme (69) und einen Bolzen (71) umfasst, der sich mit der Aufnahme (69) gleitend in Eingriff befindet und wahlweise beweglich ist zwischen:
- einer ersten Position, die ausgelegt ist zu verhindern, dass sich der dritte Körper (62) in einer ersten Drehrichtung um die dritte Drehachse (J) dreht; und
- einer zweiten Position, in der er ausgelegt ist zu ermöglichen, dass sich der dritte Körper (62) in der ersten Drehrichtung um die dritte Drehachse (J) dreht.

8. Verwandlungsflugzeug nach Anspruch 7, wobei die ersten elastischen Mittel (66) im Gebrauch eine elastische Rückstellkraft in Richtung der Verriegelungsposition auf den ersten Körper (73) ausüben;
wobei die ersten elastischen Mittel (66) ein Kompressionstyp sind; wobei die ersten elastischen Mittel (66) mit einem Vorbelastungswert vorbelastet sind, wenn sich der Fortsatz (21) in der ersten neutralen Betriebsposition befindet;
wobei die Drehung des dritten Körpers (62) in der ersten Drehrichtung im Gebrauch einer Abnahme der elastischen Rückstellkraft entspricht und die Drehung des dritten Körpers (62) in einer zweiten Drehrichtung, die zur ersten Drehrichtung entgegengesetzt ist, im Gebrauch einer Zunahme der elastischen Rückstellkraft entspricht.

9. Verwandlungsflugzeug nach Anspruch 7 oder 8, wobei das Schließsystem (60) außerdem dritte elastische Mittel (72) enthält, die ausgelegt sind, den Bolzen (71) in Richtung der ersten Position elastisch zu belasten.

10. Verwandlungsflugzeug nach einem der Ansprüche 7 bis 9, wobei der zweite Körper (62) eine Öffnung (61e) umfasst;
wobei sich der Bolzen (71) mit der Öffnung (61e) in Eingriff befindet und ausgelegt ist, im Gebrauch während der Drehung des zweiten Körpers (61) um die zweite Drehachse (I) entlang der Öffnung (61e) zu gleiten;
wobei das Schließsystem (60) ferner axiale Verriegelungsmittel (71c) umfasst, die ausgelegt sind, die translatorische Bewegung des Bolzens (71) in der Richtung von der zweiten Position zur ersten Position zu begrenzen.

## Revendications

1. Convertiplane (1) comprenant :
- un fuselage (2) s'étendant le long d'un premier axe (A) ;
- une paire de demi-ailes (3) faisant saillie en porte-à-faux depuis des côtés respectifs dudit fuselage (2) ;
- une paire de nacelles (4) hébergeant des moteurs respectifs et reliées opérationnellement auxdites demi-ailes (3) ; et
- une paire de rotors (5) associés auxdites demi-ailes (3), rotatifs autour de deuxièmes axes (B) respectifs et inclinables autour d'un troisième axe (C) transversal audit premier axe (A) et au deuxième axe (B) associé entre :
une première position dans laquelle lesdits deuxièmes axes (B) sont parallèles audit premier axe (A), et qui est atteinte lorsque ledit convertiplane (1) est en configuration avion ; et
une seconde position, dans laquelle lesdits deuxièmes axes (B) sont orthogonaux audit premier axe (A) et audit troisième axe (C) et qui est atteinte lorsque ledit convertiplane (1) est en configuration hélicoptère ;
chacune desdites demi-ailes (3) comprenant en outre un caisson d'aile (20) et au moins un appendice (21) articulé sur ledit caisson d'aile (20) et sélectivement mobile entre :
- une première position de fonctionnement neutre relative adoptée lorsque ledit convertiplane (1) est dans ladite configuration avion et dans laquelle il définit une extension dudit caisson d'aile (20) le long dudit premier axe (A) ; et
- une seconde position de fonctionnement relative adoptée lorsque ledit convertiplane (1) est dans ladite configuration hélicoptère et dans laquelle le flux d'air descendant généré par le rotor respectif (5) peut s'écouler à travers un compartiment (50) de ladite demi-aile (3) dégagé par l'appendice (21) ;
**caractérisé en ce qu'**il comprend un système de fermeture (60) configuré pour précharger élastiquement ledit appendice (21) respectif vers la première position de fonctionnement neutre respective.

2. Convertiplane selon la revendication 1, comprenant au moins un mécanisme d'entraînement (75) pour chacun desdits appendices (21) ;
chacun desdits mécanismes d'entraînement (75) étant adapté pour déplacer ledit appendice (21) respectif entre la première position de fonctionnement neutre relative et la seconde position de fonctionnement relative ;
**caractérisé en ce que** ledit système de fermeture (60) comprend un mécanisme de levier (60a) sélectivement mobile entre :
- une position de verrouillage, dans laquelle il coopère, en utilisation, avec un desdits mécanismes d'entraînement (75) pour s'assurer que ce dernier maintienne ledit appendice (21) relatif dans ladite première position de fonctionnement neutre ; et
- une position de déverrouillage, dans laquelle il permet audit mécanisme d'entraînement (75) de déplacer, en utilisation, ledit appendice (21) relatif depuis ladite première position de fonctionnement neutre ;
ledit système de fermeture (60) comprenant en outre des premiers moyens élastiques (66) adaptés pour charger élastiquement ledit mécanisme de levier (60a) vers ladite position de verrouillage.

3. Convertiplane selon la revendication 2, dans lequel ledit mécanisme de levier (60a) comprend, successivement :
- un premier corps (73) rotatif par rapport audit caisson d'aile (20) autour d'un premier axe de rotation (M) ; ledit premier corps (73) étant relié de manière opérationnelle auxdits premiers moyens élastiques (66) ;
- un deuxième corps (61) rotatif par rapport audit caisson d'aile (20) autour d'un deuxième axe de rotation (I) ; ledit deuxième corps (61) étant adapté pour coopérer en contact avec ledit mécanisme d'entraînement (75) ; et
- un troisième corps (62) rotatif par rapport audit caisson d'aile (20) autour d'un troisième axe de rotation (J) ;
ledit deuxième corps (61) et ledit troisième corps (62) étant adaptés pour coopérer l'un avec l'autre ; ledit troisième corps (62) pouvant tourner, en utilisation, du fait de la rotation dudit deuxième corps (61) ;
ledit mécanisme de levier (60a) comprenant en outre une tige de liaison (65) ; ladite tige de liaison (65) définissant une direction d'extension longitudinale (L) de celle-ci et comprenant une première extrémité (65a) et une seconde extrémité (65b) en regard l'une de l'autre le long de ladite direction d'extension longitudinale (L) ;
dans lequel l'une de ladite première extrémité (65a) et de ladite seconde extrémité (65b) est reliée de manière opérationnelle audit premier corps (73) et l'autre de ladite première extrémité (65a) et de ladite seconde extrémité (65b) est reliée de manière opérationnelle audit troisième corps (62).

4. Convertiplane selon la revendication 3, dans lequel ledit mécanisme de levier (60a) comprend également un déclencheur (63) porté par ledit troisième corps (62) d'une manière rotative autour d'un troisième axe de rotation (K) et adapté pour coopérer en contact avec ledit mécanisme d'entraînement (75) ;
ledit déclencheur (63) étant adapté, en utilisation, pour exercer une action sur ledit mécanisme d'entraînement (75) de sorte qu'il force ledit mécanisme d'entraînement (75) à maintenir ledit appendice (21) dans ladite première position de fonctionnement neutre.

5. Convertiplane selon la revendication 4, dans lequel ledit déclencheur (63) est adapté pour exercer ladite action sur ledit mécanisme d'entraînement (75) avec une intensité décroissante lorsque, en utilisation, ledit mécanisme d'entraînement (75) déplace ledit appendice (21) de ladite première position de fonctionnement neutre à ladite seconde position de fonctionnement.

6. Convertiplane selon l'une quelconque des revendications 3 à 5, dans lequel ledit deuxième corps (61) comprend une première surface de couplage (610), et ledit troisième corps (62) comprend une seconde surface de couplage (620) adaptée pour coopérer en contact avec ladite première surface de couplage (610) ;
ladite première surface de couplage (610) et ladite seconde surface de couplage (620) définissant un couplage à complémentarité de forme (67).

7. Convertiplane selon l'une quelconque des revendications 3 à 6, dans lequel ledit système de fermeture (60) comprend en outre un quatrième corps (68) fixé par rapport audit caisson d'aile (20) et comprenant un siège (69) et une goupille (71), qui met en prise de manière coulissante ledit siège (69) et est mobile sélectivement entre :
- une première position, dans laquelle elle est adaptée pour empêcher ledit troisième corps (62) de tourner autour dudit troisième axe de rotation (J) dans une première direction de rotation ; et
- une seconde position, dans laquelle elle est adaptée pour permettre audit troisième corps (62) de tourner autour dudit troisième axe de rotation (J) dans ladite première direction de rotation.

8. Convertiplane selon la revendication 7, dans lequel lesdits premiers moyens élastiques (66), en utilisation, exercent sur ledit premier corps (73) une force de rappel élastique vers ladite position de verrouillage ;
lesdits premiers moyens élastiques (66) étant du type compression ; lesdits premiers moyens élastiques (66) étant préchargés avec une valeur de précharge lorsque ledit appendice (21) est dans ladite première position de fonctionnement neutre ;
dans lequel la rotation dudit troisième corps (62) dans ladite première direction de rotation correspond, en utilisation, à une diminution de ladite force de rappel élastique, et la rotation dudit troisième corps (62) dans une seconde direction de rotation opposée à ladite première direction de rotation correspond, en utilisation, à une augmentation de ladite force de rappel élastique.

9. Convertiplane selon la revendication 7 ou 8, dans lequel ledit système de fermeture (60) comporte également des troisièmes moyens élastiques (72) adaptés pour charger élastiquement ladite goupille (71) vers ladite première position.

10. Convertiplane selon l'une quelconque des revendications 7 à 9, dans lequel ledit deuxième corps (62) comprend une ouverture (61e) ;
ladite goupille (71) mettant en prise ladite ouverture (61e) et étant adaptée, en utilisation, pour coulisser le long de ladite ouverture (61e) lors de la rotation dudit deuxième corps (61) autour dudit deuxième axe de rotation (I) ;
ledit système de fermeture (60) comprenant en outre des moyens de verrouillage axial (71c) adaptés pour limiter la translation de ladite goupille (71) dans la direction allant de ladite seconde position à ladite première position.
